# EUROPEAN PATENT APPLICATION

(11) **EP 1 995 733 A1**
(43) Date of publication of application: **26.11.2008**
(21) Application number: 07010162.1
(22) Date of filing: 22.05.2007
(51) Int. Cl.: G11B 27/19, G06F 7/32

(54) **Authorisation for uploading a composed sequence from several videos from a client to a server via internet based on the integrity of the composite video.**

(71) Applicant: Visions Unlimited Medien GmbH, 80638 München (DE)
(72) Inventor: Pechan, Paul, 80638 München (DE); Bohle-Pechan, Heidi, 80638 München (DE)
(74) Representative: Grünecker, Kinkeldey, Stockmair & Schwanhäusser Anwaltssozietät

(57) **Abstract**

The present invention relates to a method for generating and publishing a composite video sequence from content rated video sequences stored in at least one trustworthy database comprising the steps of (a) selecting at least two video sequences from the at east one database, (b) generating a composite video sequence based on the at least two video sequences, and (c) storing the composite video sequence on a server computer which is accessible over a network, in particular the Internet, only if the composite video sequence is generated from video sequences from said database.

## Description

### Field of the Invention

The invention relates to a method for generating a composite video sequence from individual video sequences. The invention also relates to a computer program product for performing the steps of the method and to a system for generating a composite video sequence from video sequences.

### Prior Art

Usually the procedure to create a composite video using video sequences is as follows. The user is logging into the server computer and can then select video clips, for example by selecting items using check boxes. On the client side, the user may drag the individual video clips onto a timeline to place them in a particular order. Thereafter, the composite video may be stored on the server computer and can be published such that other users may watch and use this video.

However, if such an online video portal is to be used for example for educational or learning purposes, the known concepts have the disadvantage that there is no control mechanism for the content of the video sequences that the users store on the server.

In particular, it is not desirable to publish video sequences in an educational forum that include for example content related to violence, content of sexual nature, content of discriminating nature or content that is related to political statements of individuals or of an individual group.

### Description of the Invention

In view of the disadvantage of the prior art, it is an object of the invention to provide a method for generating a composite video in an video editing context which overcomes the above-mentioned disadvantage and provides a content-safe video database.

The above-mentioned object is achieved by a method for generating a composite video sequence from video sequences stored in at least one database comprising the steps of (a) selecting at least two video sequences from the at least one database, (b) generating a composite video sequence based on the at least two video sequences, and (c) storing the composite video sequence on a server computer which is accessible over a network, in particular the Internet, only if the composite video sequence is generated from only the at least two video sequences (which are stored in the at least one database).

A server or a server computer in the sense of the present invention may be one specific computer or a network of computers, preferably computers in a local area network (LAN) or a wide area network (WAN).

By storing the composite video sequence on the server computer only if the composite video sequence is generated from the at least two video sequences in the at least one database, the inclusion of undesirable content such as content related to violence, content of sexual nature, content of discriminating nature or content that is related to political statements of individuals or of an individual group within the composite video sequence can be prevented. The inventive method is performed in a computing system environment.

Optionally, the method may comprise an initial step of clearing the database as being free from such undesirable content, for example if video sequences from particular users that are known as trustworthy and/or if video sequences from other know origin are included in the database. In this case, the video sequences preferably include a tag corresponding to their respective origin.

In a development of the inventive method the at least one database may be provided on the server computer, or on a further server computer. In this development the video sequences may be provided on the server computer in one or more databases that my be publicly available or may be available after a user has been registered. Moreover, the database may be provided on a further server computer that is different from the server computer on which the composite video sequence is stored.

In a further development the at least one database may be provided on a portable storage medium.

In a further development the portable storage medium may be a CD or DVD or a USB storage device. This has the advantage that the database can be easily distributed.

In a further development step (a) may be initiated by a client computer connected to the server computer. According to this development the step of selecting the at least two video sequences from the at least one database is initiated by a signal coming from the client computer that is send to the server computer via the Internet, for example.

In a further development step (b) may be performed on the server computer or on the client computer. According to this development the composite video sequence may be generated on the server computer or on the client computer.

In a further development step (a) may be initiated by a user input. According to this development the step of selecting the at least two video sequences from the at least one database is initiated by a user, e.g. by manual input using a keyboard device and/or a mouse device.

In a further development step (c) may comprise identifying the video sequences as being stored in the at least one database. According to this development checking whether the composite video sequence is based only on video sequences stored in the at least one database comprises the step of identifying the video sequences as being stored in the at least one database.

This can for example be realized by tagging the video sequences with an identification tag. This identification tag may be used by the video editing software for generating the composite video sequence, allowing only video sequences to be used that are tagged accordingly. Alternatively, if the composite video sequence is to be stored on a computer, the computer may allow storing the composite video sequence only when the individual video sequences have been identified as being part of the database. Moreover, the tagging of the video sequences for identification may be such that a bit code is distributed in individual frames of the video sequences, in particular the video sequences may be digitally water-marked.

In a further development step (c) comprises checking whether the composite video sequence is generated from the at least two video sequences.

According to this development, the checking step may be performed, for example either before step (a) or before step (b) or before step (c).

In particular, the video editing software may only allow the selection of video sequences from the at least one database.

Further, the checking step may be performed before the generating step, such that, for example, the video editing software may allow the generation of the composite video sequence from the individual video sequences only when it has been checked that only video sequences stored in the at least one database have been used for the generation of the composite video sequence.

Moreover, the checking step may be performed after the generating step, for example, software for viewing the composite video sequence may check if only video sequences stored in the database have been used for generating the composite video sequence.

In a further development step (c) may be based on a predetermined criterion. According to this development the composite video sequence is stored only on the server computer depending on a predetermined criterion. For example, it may be allowed to include pointers or other predefined graphical elements into the video sequences, and still resulting in a positive result of the checking step.

In a development of the previous development the predetermined criterion may allow for predetermined modifications of the at least two video sequences, in particular modifications in color, hue and saturation, or modifications based on information in the at least two video sequences.

According to this development it may be allowed to include only a fraction of a video sequence, i.e. from a particular starting point to a particular end point, into the composite video sequence. Further, it may be allowed to generate transient images from the at least two video sequences to produce a cross-fade effect during a transition from one to the other of the at least two video sequences.

In a development as an alternative of the previous development the predetermined criterion allows only for video sequences in the composite video sequence that are identical to respective video sequences in the database. According to this development the predetermined criterion is strict, in that only the original video sequences can be used for the generation of the composite video sequence, without any modification.

In a further development step (a) may comprise downloading the at least two video sequences from the server computer to a client computer, and step (b) may comprise arranging the at least two video sequences in a desired order. According to this development the step of selecting at least two video sequences from the at least one database can include downloading the at least two video sequences from the server computer to the client computer. This downloading can be performed by means of a video stream and/or by means of storing the at least two video sequences on the client computer.

In a further development the method may comprise the further step of uploading the composite video sequence from the client computer to the server computer. According to this development, the composite video sequence can be transferred from the client computer, where is was generated, to the server computer, where it may become available for other users. Further, this development has the advantage that the generation of the video file at the client side can be also done in an offline mode when storing the at least two video sequences and that the video sequences to be used are available on the client side in its entirety such that no further net traffic is required during the editing procedure. Only the generated composite video will then be uploaded from the client to the server.

In a further development step (b) may comprise generating a video description file comprising information on the at least two video sequences.

This development has the advantage that it is not necessary to download the complete video sequences to be used to generate the video file, but for example, only representatives of the video sequences or short parts of the video sequences may be downloaded for the arrangement in the desired order. After generating the video description file containing for example the desired arrangement and uploading the video description file to the server, software running on the server may generate the composite video sequence. This has the advantage of considerably lower net traffic. Moreover, this development has the advantage that only the video description file may be stored having a considerably smaller size than the composite video sequence.

A further development may comprise the steps of selecting at least one audio file and/or selecting at least one text file and associating the at least one audio file and/or at least one text file with the composite video sequence.

According to this development, the user may incorporate a particular audio file and/or text file, for example, music or speech and/or text for annotating purposes into the video file. Similarly to the individual video sequences, the selection of the at least one audio file and/or text file may be allowed only by using audio files and/or text files that are available on a server computer.

According to a further development of the previous development the method may comprise the further step of storing the associated audio file and/or text file and the composite video sequence on the server computer, particularly only if the audio file and/or text file is free of content related to violence, content of sexual nature, content of discriminating nature or content that is related to political statements of individuals or of an individual group. This has the advantage that the data files are available from the same location and that the audio part and/or text part may be free of undesired content. As a specific example, a speech recognition software running on the server computer may check the audio file for particular keywords and the storing of the audio file may only be allowed if this speech recognition software did not find any of those keywords, which may be available in a list.

A further development may comprise the step of generating transient images between the at least two video sequences or between parts of the at least two video sequences

This development as the advantages that hard cuts between individual video sequences used for the generation of the composite video can be avoided.

According to another development of the inventive method and the preceding developments, the method comprises the step of searching the database for a particular content of the video sequences.

According to this development, the user has the possibility to search in the database of video sequences for a particular content, for example particular keywords describing the content of the video sequences, in order to find suitable material for the generation of a composite video sequence.

A further development comprises the step of starting video editing software in an Internet browser.

For example, a Java application that allows video editing may be downloaded from the server to the client and run in the Internet browser, which Java application allows the selection of at least two video sequences, allows the generation of the video file from the at least two video sequences, and allows the confirmation that only video sequences stored in the database are used for generating the video file, for example by checking the means that identify the video sequences as being stored in the database.

The invention also relates to a computer program product comprising one or more computer-readable media having computer-executable instructions for performing the steps of the inventive method or its developments when run on a computer.

Moreover, the invention relates to a system for generating a composite video sequence from video sequences stored in at least one database, comprising: a selection component for selecting at least two video sequences from the at least one database, a generation component for generating a composite video sequence based on the at least two video sequences, and a storing component for storing the composite video sequence on a server computer which is accessible over a network, in particular the Internet, only if the composite video sequence is generated from only the at least two video sequences stored in the at least one database.

According to a development of the previous development the system may be a server computer.

The inventive method and its developments may be used individually or in combination with each other.

### Description of the Embodiments

According to a first embodiment, a user may compose his own video from video sequences provided on a database on a server. The user, or client is connected to the server via the Internet. In this embodiment, it is not desired that the complete video sequences can be downloaded in order to be edited with available video editing software.

According to this embodiment, for example a Java application is started in the browser on the client side, which provides a graphical surface for the video editing. First, representations of the video sequences are provided, for example individual images representing the first picture in a video sequence. The Java application may provide a timeline or storyboard for ordering the video sequences in time, including a start point and an end point. Further, the application may allow cutting of a video sequence, such that only a fragment of the video sequence can be used. Moreover, the Java application confirms that only video sequences stored in the database are used for generating a composite video file from the individual video sequences.

The user actions, for example including the video sequences, cutting and moving the video sequences on the timeline or storyboard, are shown in the client application and are transmitted to the server in the background. In order that the user can view individual video sequences that generated composite video the cooperation of the server is required. The server has to record the editing in the timeline or storyboard, and further has to send the video sequences or fragments thereof as a preview to the client and/or allow a preview of the video sequences or fragments thereof by the client.

A preferred solution for the preview is streaming video. After the server receives the starting point of a video sequence, the server can start to send data packages and after reaching the end point of the first video sequence, the server can proceed with the second video sequence. Preferably the video data are transferred via the Internet in compressed format.

The video editing software, which may be downloadable from the server computer, checks if the video sequences used for generating the composite video sequence are generated from the video sequences available on the server computer, for example by checking for an identification code in the video sequences.

In this implementation, the user logs into the server computer and searches for video sequences and/or sound bits for a particular topic of a composite video sequence. The user places the video sequences onto a timeline or storyboard and edits them further by including, for example transitions between video sequences. This editing can be performed online or offline. The finished composite video sequence is placed into the database by uploading the composite video to the server.

According to a second embodiment of the present invention, the video sequences to be used for generating a composite video sequence are downloaded completely from the server to the client, where they can be edited offline. After editing and generating the composite video sequence, it can be uploaded to the server. The other features may be similar to the first embodiment.

According to a third embodiment of the present invention, the composite video sequence is stored as a video description file. This has the advantage that the users do not need to upload the whole video file, but only the video description file. However, it may be required to upload self recorded voice audio files. By using the video description file, a user may start the video at a given starting point within a video player running on the client side, and the server may continually send data to the client as long as the player runs. The other features may be similar to the first embodiment.

## Claims

1. Method for generating a composite video sequence from video sequences stored in at least one database comprising the steps of
(a) selecting at least two video sequences from the at least one database,
(b) generating a composite video sequence based on the at least two video sequences,and
(c) storing the composite video sequence on a server computer which is accessible over a network, in particular the Internet, only if the composite video sequence is generated from only the at least two video sequences.

2. Method according to claim 1, wherein the at least one database is provided on the server computer, or on a further server computer.

3. Method according to claim 1, wherein the at least one database is provided on a portable storage medium, particularly a CD, DVD or USB storage device.

4. Method according to any one of the preceding claims, wherein step (a) is initiated by a client computer connected to the server computer.

5. Method according to any one of the preceding claims, wherein step (b) is performed on the server computer or on the client computer.

6. Method according to any one of the preceding claims, wherein step (a) is initiated by a user input.

7. Method according to any one of the preceding claims, wherein step (c) comprises
identifying the video sequences as being stored in the at least one database.

8. Method according to any one of the preceding claims, wherein step (c) comprises checking whether the composite video sequence is generated from the at least two video sequences.

9. Method according to any one of the preceding claims, wherein step (c) is based on a predetermined criterion.

10. Method according to claim 9, wherein the predetermined criterion allows for predetermined modifications of the at least two video sequences, in particular modifications in color, hue and saturation, or modifications based on information in the at least two video sequences.

11. Method according to claim 9, wherein the predetermined criterion allows only for video sequences in the composite video sequence that are identical to respective video sequences in the database.

12. Method according to any one of the preceding claims, wherein
step (a) comprises downloading the at least two video sequences from the server to a client, and
step (b) comprises arranging the at least two video sequences in a desired order.

13. Method according to claim 12, comprising the further step of uploading the composite video sequence from the client to the server.

14. Method according to any one of the preceding claims, wherein step (b) comprises generating a video description file comprising information on the at least two video sequences.

15. Method according to any one of the preceding claims, comprising the further steps of
selecting at least one audio file and/or selecting at least one text file, and
associating the at least one audio file and/or the at least one text file with the composite video sequence.

16. Method according to claim 15, comprising the further step of storing the associated audio file and/or text file together with the composite video sequence on the server computer, particularly only if the audio file and/or text file is free of content related to violence, content of sexual nature, content of discriminating nature or content that is related to political statements of individuals or of an individual group.

17. Method according to any one of the preceding claims, comprising the step of generating transient images between the at least two video sequences or between parts of the at least two video sequences.

18. Method according to any one of the preceding claims, comprising the step of searching the database for a particular content of the video sequences.

19. Method according to any one of the preceding claims, comprising the step of starting video editing software in an internet browser.

20. Computer program product comprising one or more computer-readable media having computer-executable instructions for performing the steps of the method according to any one of the claims 1 to 19 when run on a computer.

21. System for generating a composite video sequence from video sequences stored in at least one database, comprising:
a selection component for selecting at least two video sequences from the at least one database,
a generation component for generating a composite video sequence based on the at least two video sequences, and
a storing component for storing the composite video sequence on a server computer which is accessible over a network, in particular the internet, only if the composite video sequence is generated from only the at least two video sequences stored in the at least one database.

22. System according to claim 21, wherein the system is a server computer.
